Europäisches Patentamt

European Patent Office

Office européen des brevets

(19)

(11) **EP 1 246 137 A1**

(12) **EUROPÄISCHE PATENTANMELDUNG**

(43) Veröffentlichungstag:
**02.10.2002 Patentblatt 2002/40**

(51) Int Cl.$^7$: **G07C 9/00**, B60R 25/00

(21) Anmeldenummer: **02100211.8**

(22) Anmeldetag: **01.03.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **26.03.2001 DE 10114876**

(71) Anmelder: **SIEMENS AKTIENGESELLSCHAFT**
**80333 München (DE)**

(72) Erfinder: **Ott, Albert, Prof.-Dr.**
**65207, Wiesbaden-Auringen (DE)**

(54) **Identifikationssystem zum Nachweis einer Berechtigung für den Zugang zu einem Objekt oder die Benutzung eines Objekts, insbesondere eines Kraftfahrzeugs**

(57)     Bei dem Identifikationssystem wird ein Abfragesignal einer objektseitigen Sende- und Empfangseinheit und ein Antwortsignal eines tragbaren Codegebers (3) abschnittsweise und jeweils wechselseitig ausgesendet. Wenn einerseits eine in dem Antwortsignal enthaltene Codeinformation mit einer Referenzinformation und andererseits eine Gesamtsignallaufzeit ($T_{FAD2}$) kleiner als eine Referenzdauer ($t_s$) ist, so wird ein Freigabesignal zum Freigeben des Zugangs oder der Benutzung des Objekts erzeugt.

## FIG 3

**Beschreibung**

Die Erfindung betrifft ein Identifikationssystem zum Nachweis einer Berechtigung für den Zugang zu einem Objekt oder die Benutzung eines Objekts, insbesondere eines Kraftfahrzeugs.

Funkbasierte Identifikationssysteme, auch RF-ID "radio frequency identification" Systeme genannt, finden, z.B. als Ersatz für mechanische Schlüsselsysteme, beim Zugangsschutz für Rechner oder etwa bei automatischen Zahlungssystemen zunehmenden Einsatz. Ein RF-ID-System besteht aus einer elektronischen Identifikationsmarke (im folgenden als Codegeber bezeichnet), die auch elektronischer Schlüssel, RF-ID-Tag, ID-Geber oder ID-Karte genannt wird, die der Benutzer bei sich trägt oder die an einem zu identifizierenden Objekt angeordnet ist. Der Codegeber ist mit einem charakteristischen Code (Codeinformation) ausgestattet. Dieser Code wird üblicherweise über eine Basisstation (im folgenden als Sende- und Empfangseinheit bezeichnet) abgefragt und anschließend authentifiziert oder verifiziert. Der Code kann auch durch andere Auslösemechanismen ausgelöst vom Codegeber zum Objekt gesendet werden.

Verschiedene funkbasierte Übertragungstechnologien sind möglich oder üblich: LF-Systeme im Frequenzbereich von 100-300 kHz, RF-Systeme bei 433 MHz oder 867 MHz und hochfrequente Mikrowellensysteme, die zumeist bei den Frequenzen 2,4 GHz, 5,8 GHz, 9,5 GHz oder 24 GHz arbeiten.

Man unterscheidet bei Codegebern zwischen einer aktiven und passiven Identifikation. Die passive Identifikation zeichnet sich dadurch aus, dass der Codegeber ständig, ohne Zutun des Benutzers von der Sende- und Empfangseinheit abgefragt werden kann. Befindet sich der Codegeber innerhalb eines gewissen Entfernungsbereiches zur Sende- und Empfangseinheit, so erfolgt die Kommunikation zwischen Sende- und Empfangseinheit und Codegeber automatisch oder z.B. ausgelöst durch manuelle Betätigung einer Schalteinrichtung, wie z.B. durch Betätigen einer Türklinke durch den Benutzer. Die Beschränkung des Entfernungsbereiches ergibt sich im allgemeinen aus der Funkfelddämpfung. Das Aussenden des Abfragesignals und des daraufhin ausgelösten Antwortsignal wird auch als Frage-Antwort-Dialog bezeichnet.

Bei einem aktiven Identifikationssystem hingegen wird die Kommunikation aktiv vom Benutzer am Codegeber ausgelöst. Der Benutzer muss hierbei also üblicherweise zum einen den Codegeber manuell bedienen und dann z.B. zusätzlich die Türklinke betätigen, um die Tür zu öffnen. Aus Gründen eines erhöhten Komforts finden daher passive Identifikationssysteme vermehrt Anwendung.

Nachteilig ist bei solchen Identifikationssystemen, dass der Übertragungskanal unbemerkt und zu einem im Prinzip beliebigen Zeitpunkt abgehört werden kann. Durch eine geeignete Einrichtung ist es einem Angreifer daher normalerweise möglich, sich den Code unbefugt zugänglich zu machen und damit die eigentlich angestrebte Schutzfunktion zu überwinden.

Bei einem bekannten Identifikationssystem (DE 198 36 957 C1) wird versucht, die Sicherheit gegen unbefugte Benutzung oder unbefugten Zugang infolge von Abhörens des Frage-Antwort-Dialogs zu erhöhen. Dabei wird von der Basisstation ein erstes Abfragesignal ausgesendet, dessen Empfangsleistung auf dem Codegeber gemessen wird. Anschließend wird ein zweites Abfragesignal unter veränderten Sendebedingungen ausgesendet, dessen Empfangsleistung ebenfalls auf dem Codegeber gemessen wird. Erst wenn die Empfangsleistungen unterschiedlich sind, wird die in dem Antwortsignal enthaltene Codeinformation ausgewertet.

Bei diesem Identifikationssystem müssen Empfangsleistungen auf dem Codegeber (und auch in der Basisstation) gemessen werden, bevor der Zugang oder die Benutzung freigegeben wird. Auch wenn dadurch die Sicherheit gegen unbefugte Benutzung oder unbefugten Zugang erhöht wird, so wird doch ein aufwändig aufgebauter und teurer Codegeber und auch eine aufwändige Basisstation benötigt.

Aufgabe der Erfindung ist es, ein Identifikationssystem zu schaffen, durch das eine verbesserte Sicherheit gegen unbefugte Benutzung oder unbefugten Zugang geschaffen wird.

Diese Aufgabe wird erfindungsgemäß durch ein Identifikationssystem nach den Merkmalen von Patentanspruch 1 gelöst. Bei dem Identifikationssystem wird eine Frage-Antwort-Dialog zwischen Objekt und Codegeber durchgeführt, durch den Codeinformationen ausgetauscht und verifiziert werden. Damit nur ein Codegeber in Nähe des Objekts einen Nachweis zur Berechtigung für den Zugang zu dem Objekt oder der Benutzung des Objekts erhalten kann, wird der Frage-Antwort-Dialog in Abschnitten durchgeführt. Die Gesamtzeitdauer des Frage-Antwort-Dialogs darf einen vorgegebenen Schwellwert nicht überschreiten. Dies ist nur dann der Fall, wenn sich der Benutzer mit dem Codegeber in der Nähe des Objekts befindet. Nur dann dient die von dem Codegeber gelieferte Codeinformation als Nachweis einer Berechtigung für den Zugang oder die Benutzung des Objekts.

Vorteilhafte Ausgestaltungen der Erfindung sind durch die Unteransprüche wiedergegeben.

Ausführungsbeispiele der Erfindung werden im folgenden anhand der schematischen Zeichnungen näher erläutert. Es zeigen:

Figur 1     ein erfindungsgemäßes Identifikationssystem, das in einem Kraftfahrzeug angeordnet ist,

Figur 2     einen Signalverlauf für ein Abfragesignal und ein Antwortsignal bei einem herkömmlichen Identifikationssystem,

Figur 3     einen Signalverlauf für ein Abfragesignal und ein Antwortsignal bei einem erfindungsgemäßen Identifikationssystem, und

Figur 4    einen Laufzeitvergleich von Abfragesignal
und Antwortsignal bei einem herkömmlichen
Identifikationssystem und bei dem erfindungsgemäßen Identifikationssystem.

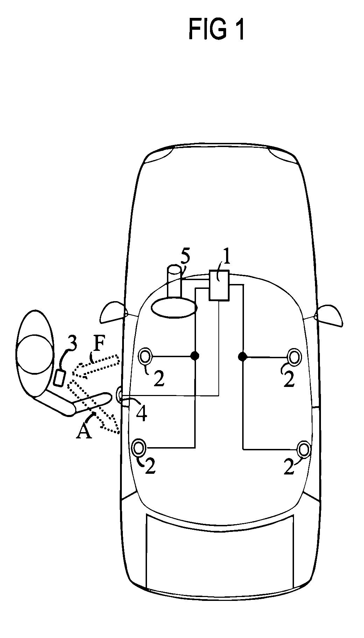

Im folgenden wird ein Identifikationssystem
zum Nachweis einer Berechtigung für den Zugang zu
einem Objekt oder die Benutzung eines Objekts am Beispiel eines Kraftfahrzeugs als Objekt näher erläutert.
Das Identifikationssystem kann selbstverständlich auch
bei anderen Objekten eingesetzt werden, bei denen ein
Zugang nur nach Nachweis einer Berechtigung möglich
ist, wie beispielsweise bei einem Computer, einem Telefon, einem Geldautomaten, einem Gebäude, Garagen
oder sonstigen zunächst versperrten Bereichen.
Das Identifikationssystem weist eine Basisstation 1 (Figur 1) mit einer Sende- und Empfangseinheit
auf. Dies Basisstation 1 ist mit Antennen 2 verbunden,
über die Signale gesendet und empfangen werden können. Die Antennen 2 sind an exponierten Stellen im
Kraftfahrzeug angeordnet, so dass Signale in den Innenraum des Kraftfahrzeugs und in den näheren Umgebungsbereich des Kraftfahrzeugs mit ausreichender
Stärke gesendet werden können und Signale von dort
hinreichend gut empfangen werden können.
In dem Kraftfahrzeug sind nicht dargestellte Sicherheitsaggregate (wie Türschlösser für den Zugang
zum Kraftfahrzeug oder ein Zünd-/Lenkschloss für eine
Wegfahrsperre) für die Benutzung des Kraftfahrzeugs
angeordnet, die ebenfalls mit der Basisstation 1 über
Daten- (Bus-) und/oder Steuerleitungen verbunden
sind. Nur bei Nachweis einer Berechtigung werden die
Sicherheitsaggregate mit Hilfe eines codierten Freigabesignals in einen ver- oder entriegelten Zustand gesteuert.
Des Weiteren weist das Identifikationssystem
einen mobilen, tragbaren Codegeber 3 auf, der seinerseits zeichnerisch nicht dargestellte Sender und Empfänger aufweist. Der Codegeber 3 kann Signale empfangen und Signale aussenden. Üblicherweise wird er
dazu verwendet, ein codiertes Antwortsignal auszusenden, sobald er ein Abfragesignal zuvor empfangen hat
(daher wird ein solcher Codegeber auch als Transponder bezeichnet). Mit dem Antwortsignal und einer darin
enthaltenen, verschlüsselten Codeinformation wird eine
Berechtigung zum Zugang oder Benutzung des Objekts
nachgewiesen, indem die Codeinformation mit einer
Referenzcodeinformation verglichen wird und ein Nachweis einer Berechtigung bei zumindest weitgehender
Übereinstimmung erbracht ist.
Bei dem vorliegenden Identifikationssystem
liegt nur dann eine Berechtigung vor, wenn einerseits
die Basisstation 1 die komplette Codeinformation empfängt und auch verifiziert und wenn sich andererseits
der Codegeber 3 in der Nähe des Kraftfahrzeugs befinden, sobald Zugang oder Nutzung begehrt wird.

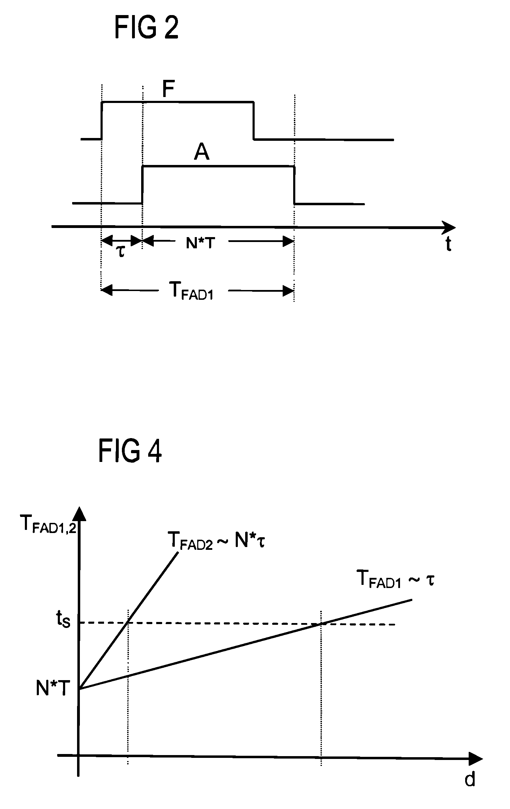

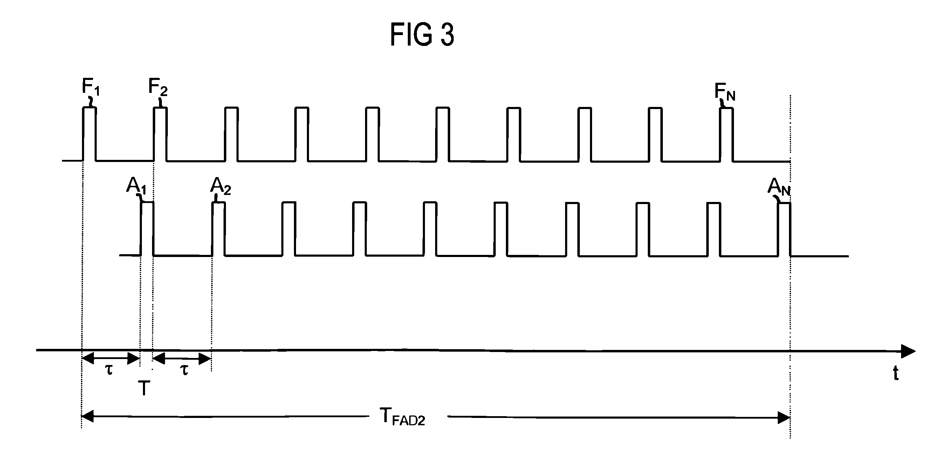

Ob sich der Codegeber 3 in der Nähe befindet
wird erfindungsgemäß durch eine Zeitmessung des gesamten Frage-Antwort-Dialogs zwischen Kraftfahrzeug
und Codegeber 3 und durch Vergleich mit einer Referenzdauer festgestellt. Wenn der Benutzer mit seinem
Codegeber 3 weit vom Kraftfahrzeug entfernt ist, so wird
die Zeitdauer, die für den Frage-Antwort-Dialog benötigt
wird, zu groß. Bei geringem Abstand ist die Zeitdauer
jedoch klein und ist somit im regulären Betrieb des Identifikationssystems erwünscht.
Bei dem Identifikationssystem wird der Frage-
Antwort-Dialog erfindungsgemäß in Teilabschnitt durchgeführt, wobei in den Teilabschnitten Teile der verschlüsselten Codeinformation enthalten sind. Erst wenn
alle Teilabschnitte von der Basisstation 1 empfangen
wurden, wird die Zeitmessung beendet. Die komplette,
mit dem Antwortsignal empfangene Codeinformation
kann nun mit der Referenzcodeinformation verglichen
werden.
Durch das abschnittsweise Aussenden von Signalen wird die Zeitdauer gegenüber herkömmlichen
Systemen deutlich vergrößert und kann einerseits einfach sowie fehlerfrei gemessen werden. Andererseits
unterscheidet sich die gemessene Zeitdauer deutlich
von Zeitdauern, die bei weiter entfernten Codegebern 3
gemessen würde, so dass eine klare Grenze (Schwellwert) für die Unterscheidung von in der Nähe befindlichen Codegebern und weiter entfernten Codegeber 3
gezogen werden kann.
Wenn sich ein Benutzer dem Kraftfahrzeug nähert, einen Türgriff oder einen Schalter am Kraftfahrzeug betätigt, so wird der Frage-Antwort-Dialog ausgelöst und die Zeitmessung gestartet. Bei herkömmlichen
Identifikationssystemen (Figur 2) wird zunächst das Abfragesignal (auch als Frage F oder Challenge bezeichnet) ausgesendet, wodurch ein Antwortsignal (auch als
Antwort A oder Response bezeichnet) des Codegebers
3 ausgelöst wird. Nach der Signallaufzeit $\tau$ (Laufzeit des
Signals von der Basisstation 1 zum Codegeber 3 und
zurück zur Basisstation 1) wird der Beginn des Antwortsignals von der Basisstation 1 empfangen. Die komplette Zeitdauer für den kompletten Frage-Antwort-Dialog
entspricht bei herkömmlichen Identifikationssystemen
der Gesamtzeitdauer $T_{FAD1}$.
Bei der Erfindung hingegen wird zunächst ein
erster Teilabschnitt $F_1$ (Figur 3) des Abfragesignals ausgesendet. Der Codegeber 3 reagiert darauf mit dem
Aussenden eines ersten Teilabschnitts $A_1$ des Antwortsignals. Als Teilabschnitte $F_1$ oder $A_1$ können beispielsweise Bytegruppen oder Bitgruppen der Signale dienen,
d.h. es werden bei binärer Codierung der Signale ein
oder mehrere Bits zusammen ausgesendet.
Zunächst sei angenommen, dass Frage F und
Antwort A aus jeweils N Bytes (Teilabschnitten) bestehen. Selbstverständlich können auch eine unterschiedliche Anzahl von Bytes bei Frage F und Antwort A vorhanden sein, wodurch das Prinzip der Erfindung nicht
verändert wird.

Jedes Byte benötigt die Zeitdauer T zur Übertragung. Somit benötigt das Abfragesignal bei einem herkömmlichen Identifikationssystem die Zeitdauer N*T (vgl. Figur 2). Das Antwortsignal benötigt die gleiche Zeitdauer N*T, trifft jedoch um die Signallaufzeit $\tau$

$$\tau = 2 \cdot \frac{d}{c} + t_0$$

(mit d = Entfernung Basisstation 1 - Codegeber 3, c = Lichtgeschwindigkeit, $t_0$ = Signallaufzeit in den elektronischen Baugruppen von Basisstation 1 und Codegeber 3) zeitversetzt wieder bei der Basisstation 1 ein. Damit ergibt sich die Gesamtzeitdauer für den kompletten Frage-Antwort-Dialog zu:

$$T_{FAD1} = N*T + \tau$$

(mit N = Anzahl des Bytes und T = Zeitdauer eines Bytes).

Üblicherweise ist die reine Signallaufzeit im freien Raum (= 2d/c) sehr klein gegenüber der Zeitdauer T. Zudem ist die Laufzeit $t_0$ in den Elektronikbaugruppen ebenso wie die Zeitdauer T starken Toleranzen (Temperatureinflüsse, etc.) unterworfen. Infolgedessen kann die einfache Signallaufzeit $\tau$ nicht eindeutig als Entscheidungskriterium für einen zulässigen Maximalabstand (Grenzabstand) zwischen Basisstation 1 und Codegeber 3 hergenommen werden, da sie - je nach Umgebungsbedingungen - mehr oder weniger stark variiert.

Eine Laufzeitmessung als Kriterium für einen Grenzabstand kann erfindungsgemäß dann verwendet werden, wenn das Abfragesignal und das Antwortsignal in Teilabschnitte $F_i$, $A_i$ (Bytes oder Bits) unterteilt wird und ein Teilabschnitt des Abfragesignal ein Teilabschnitt des Antwortsignal auslöst. Der nächste Teilabschnitt des Abfragesignals wird erst dann ausgelöst, wenn der Teilabschnitt des Antwortsignals vollständig in der Basisstation 1 angekommen ist. Dieses "Wechselspiel" von Frage und Antwort wird auch als "Handshakebetrieb" bezeichnet.

Figur 3 zeigt einen Signalverlauf für ein Abfragesignal und ein Antwortsignal, wobei bei diesem Ausführungsbeispiel beide Signale aus N = 10 Teilabschnitten $F_i$, $A_i$ (i = 1 .. N) bestehen. Nach Auslösen des Frage-Antwort-Dialogs beispielsweise durch Betätigen des Türgriffs wird der erste Teilabschnitt $F_1$ des Abfragesignals ausgesendet. Nach der Signallaufzeit $\tau$ (beginnend mit dem Anfang/ansteigende Flanke des ersten Teilabschnitts $F_1$) trifft die zugehörige Antwort $A_1$ in der Basisstation 1 ein. Die Übertragung eines Teilabschnittspaares ist dann nach der Signallaufzeit $\tau$ plus der Zeitdauer T abgeschlossen.

Das Ende des ersten Teilabschnitts $A_1$ des Antwortsignals (entspricht der abfallenden Signalflanke) löst das Aussenden des zweiten Teilabschnitts $F_2$

des Abfragesignal aus. Dies setzt sich so fort, bis der letzte Teilabschnitt $A_N$ des Antwortsignals in der Basisstation 1 vollständig eingetroffen ist.

Die für den kompletten Frage-Antwort-Dialog benötigte Gesamtzeitdauer $T_{FAD2}$ (auch als Austauschzeitdauer bezeichnet) beträgt dann

$$T_{FAD2} = N*T + N*\tau$$

Die Gesamtzeitdauern $T_{FAD2}$ (Erfindung) und $T_{FAD1}$ (herkömmliches Identifikationssystem) unterscheiden sich im Wesentlichen durch

$$T_{FAD2} - T_{FAD1} = (N-1)*\tau = (N-1)*(2d/c + t_0)$$

und damit im Wesentlichen durch die Anzahl N der Teilabschnitte. Somit wird deutlich, dass durch den so genannten Handshakebetrieb mit Hilfe der Laufzeit ein klar unterscheidbares, sicheres Kriterium geschaffen wird, um sicher zu erkennen, ob der Codegeber 3 in der Nähe des Kraftfahrzeugs ist oder nicht.

Dies wird durch die Figur 4 weiter verdeutlicht, denn in Figur 4 ist ein Laufzeitvergleich von Abfragesignal und Antwortsignal bei einem herkömmlichen Identifikationssystem und bei dem erfindungsgemäßen Identifikationssystem in Abhängigkeit des Abstands d zeichnerisch dargestellt.

Die erste Gerade für die Gesamtzeitdauer $T_{FAD1}$ stellt die Abhängigkeit der Gesamtzeitdauer $T_{FAD1}$ des Frage-Antwort-Dialogs vom Abstand d zwischen Basisstation 1 und Codegeber 3 bei einem herkömmlichen Identifikationssystem dar. Diese Gerade ist proportional zu der Signallaufzeit $\tau$.

Die zweite Gerade für die Gesamtzeitdauer $T_{FAD2}$ stellt die Abhängigkeit der Gesamtzeitdauer $T_{FAD2}$ des erfindungsgemäßen Frage-Antwort-Dialogs vom Abstand d zwischen Basisstation 1 und Codegeber 3 dar. Die Steigung dieser Geraden ist proportional zu der Signallaufzeit $N*\tau$.

Wird nun eine Zeitschwelle $t_s$ (auch als Referenzdauer oder Referenzzeitdauer bezeichnet) vorgegeben, die ein Kriterium für den maximal zugelassenen Abstand d realistischerweise darstellt, so erkennt man, dass die Gerade der Schwellwertgrenze die beiden Geraden $T_{FAD1}$ und $T_{FAD2}$ bei stark unterschiedlichen Abständen d und damit stark unterschiedlichen Laufzeiten schneidet.

Um überhaupt eine realistische Zeitdauer zu messen, muss eine Mindestlaufzeit vorhanden sein. So wird beim herkömmlichen Identifikationssystem eine relativ große Laufzeit und damit ein großer Abstand benötigt, der bei dem erfindungsgemäßen Identifikationssystem wesentlich kleiner sein kann.

Somit kann mit dem erfindungsgemäßen Identifikationssystem auf einfache Weise eine Grenzwert für den Abstand d vorgegeben werden. Wenn anhand einer Laufzeitmessung des gesamten Frage-Antwort-Dialogs ermittelt wird, dass der Abstand d größer als durch den Grenzwert oder Schwellwert $t_s$ zugelassen vorhanden ist, so reicht auch die korrekte Codeinformation nicht aus, eine Berechtigung nachzuweisen.

Je größer die Anzahl N der Teilabschnitte wird, desto sicherer und genauer kann eine Abstandsbestimmung vorgenommen werden. Allerdings wird dadurch auch die Wartezeit für den Benutzer größer, bis er berechtigterweise Zugang findet.

In die gesamte Codeinformation kann jeder Teilabschnitt $A_i$ des Antwortsignals mit einbezogen sein. Damit eine genügend hohe Sicherheit gegen unbefugtes Abhören vorhanden ist, wird die Codeinformation auf mehrere Teilabschnitte aufgeteilt. Es müssen nicht alle Teilabschnitte einen Teil der Codeinformation enthalten. Es können also auch so genannte Scheininformationen in Teilabschnitten übertragen werden, die nichts zur Codeinformation beitragen.

Die Anzahl N der Teilabschnitte kann beim Abfragesignal eine andere sein wie beim Antwortsignal. So kann beispielsweise jeder zweite Teilabschnitt des Abfragesignals jeweils einen Teilabschnitt des Antwortsignals auslösen.

Wie weit der Benutzer mit seinem Codegeber 3 maximal vom Objekt entfernt sein darf, kann durch die Zeitschwelle $t_s$ festgelegt werden. Denn wenn ein Frage-Antwort-Dialog mit mehreren Teilabschnitten ausgesendet wird, so darf die Gesamtzeitdauer $T_{FAD2}$ des Frage-Antwort-Dialogs die Referenzdauer $t_s$ nicht überschreiten. Ist dies dennoch der Fall, so kann davon ausgegangen werden, dass eine unbefugte Manipulation stattgefunden hat.

Die Gesamtzeitdauer $T_{FAD2}$ des Frage-Antwort-Dialogs kann auch nicht beliebig klein werden, da die minimale Zeitdauer $T_{FADmin}$

$$T_{FADmin} = N_F * T_{A,F} + N * \tau_{min}$$

(mit $N_F$, $N_A$ = Anzahl der Teilabschnitte von Frage bzw. Antwort, $T_F$, $T_A$ = Zeitdauer eines Teilabschnitts von Frage bzw. Antwort und $\tau_{min}$ = Mindestlaufzeit bei Codegeber 3 ganz nahe dem Objekt) bei dem Identifikationssystem ohnehin benötigt wird.

Selbst wenn ein unbefugter Codegeber 3 die Antwort mit der Codeinformation in einem einzigen Mal aussenden würde, so verbliebe immer noch die Mindestdauer

$$T_{FADmin} = N_F * T_F + N * \tau_{min}$$

Die Zeitdauern $T_F$, $T_A$ der Teilabschnitte von Frage bzw. Antwort müssen nicht gleich sein. Auch können die Zeitdauern $T_F$, $T_A$ in einem vorgegebenen Algorithmus variieren.

Vorteilhafterweise können die Signale sowohl bei kleinen Trägerfrequenzen, wie beispielsweise 125 kHz, als auch hochfrequent, beispielsweise bei 433 MHz, 868 MHz oder 2,4 GHz, drahtlos ausgesendet werden. Für die Erfindung ist es jedoch unwesentlich, bei welcher Frequenz das Abfragesignal und das Antwortsignal ausgesendet werden.

Da hochfrequente Signale eine viel größer Reichweite haben, ist es umso wichtiger, dass ein maximaler Abstand d zwischen Basisstation 1 und Codegeber 3 festgelegt wird, innerhalb dessen sich der Codegeber 3 beim Zugangswunsch oder Benutzungswunsch befinden muss. Und dieser Abstand kann beim erfindungsgemäßen Identifikationssystem sehr gut und vergleichbar ermittelt werden.

Die Basisstation 1 kann unmittelbar bei einer der Antennen 2 oder zentral angeordnet sein. Als Auslöser für den Frage-Antwort-Dialog kann ein Schalter außen am Kraftfahrzeug oder der Türgriff 4 selber dienen. Ebenso kann ein Zündstartschalter 5 im Kraftfahrzeug als Auslöser für den Frage-Antwort-Dialog dienen, um danach die Wegfahrsperre zu lösen (Benutzung des Kraftfahrzeugs freigeben). Der Schwellwert für die Gesamtzeitdauer des Frage-Antwort-Dialogs kann dann so eingestellt werden, dass sich der Codegeber 3 sicher innerhalb des Kraftfahrzeugs befinden muss, um - bei korrekter Codeinformation - die Wegfahrsperre zu lösen.

Unter dem Begriff "Codegeber" ist ein elektronischer Schlüssel oder auch so genannter ID-Geber zu verstehen, der - unabhängig von der Form des Gehäuses, in dem er angeordnet ist - dazu geeignet ist, bei Auslösung durch ein Abfragesignal ein Antwortsignal mit verschlüsselter Codeinformation zu dem Objekt zu senden, durch die eine Berechtigung zum Ver- oder Entriegeln von Türen oder zum Freigeben einer Benutzung nachgewiesen wird.

**Patentansprüche**

1. Identifikationssystem zum Nachweis einer Berechtigung für den Zugang zu einem Objekt oder die Benutzung eines Objekts, insbesondere eines Kraftfahrzeugs, mit

   - einer objektseitig angeordneten Sende- und Empfangseinheit (1, 2), die mit einer Steuer- und Auswerteeinheit (1) verbunden ist, durch die Abfragesignale (F) ausgesendet und Antwortsignale (A) empfangen werden, wobei die in den empfangenen Antwortsignalen enthaltene Codeinformation mit einer Referenzcodeinformation verglichen wird und durch die bei zumindest weitgehender Übereinstimmung ein Freigabesignal zum Steuern eines Sicherheitsaggregats erzeugt wird, und
   - einem mobilen Codegeber (3), der von einem Benutzer getragen wird und der infolge des Empfangs eines Abfragesignal (F) ein Antwortsignal (A) aussendet, in dem die für den Codegeber (3) charakteristische Codeinformation enthalten ist,

**dadurch gekennzeichnet,**

- **dass** das Abfragesignal (F) und das Antwortsignal (A) jeweils in mehrere Teilabschnitte ($F_i$, $A_i$) unterteilt und abschnittsweise ausgesendet werden, wobei ein Teilabschnitt des Antwortsignals erst dann ausgesendet wird, wenn zuvor ein Teilabschnitt des Abfragesignals empfangen wurde, und
- **dass** eine Zeitdauer ($T_{FAD2}$) vom Beginn des Aussenden des ersten Teilabschnitts ($F_1$) des Abfragesignals bis zum Ende des Empfangs des letzten Teilabschnitts ($A_N$) des Antwortsignals gemessen und mit einer Referenzdauer ($t_s$) verglichen wird.

2. Identifikationssystem nach Anspruch 1, **dadurch gekennzeichnet, dass** das Freigabesignal erst dann ausgelöst wird, wenn die in dem empfangenen Antwortsignal enthaltene Codeinformation mit einer Referenzcodeinformation zumindest weitgehend übereinstimmt und die Zeitdauer ($T_{FAD2}$) kleiner als die Referenzdauer ($t_s$) ist.

3. Identifikationssystem nach Anspruch 1, **dadurch gekennzeichnet, dass** das Abfragesignal (F) und/oder das Antwortsignal (A) bei Trägerfrequenzen von 125 kHz, 433 MHz oder 868 MHz ausgesendet werden.

# FIG 1

## FIG 2

## FIG 4

EP 1 246 137 A1

# FIG 3

**EP 1 246 137 A1**

**Europäisches Patentamt**

# EUROPÄISCHER RECHERCHENBERICHT

Nummer der Anmeldung

EP 02 10 0211

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 781 076 A (VALEO SECURITE HABITACLE) 14. Januar 2000 (2000-01-14) * Zusammenfassung * * Seite 3, Zeile 20 - Seite 4, Zeile 13 * * Seite 6, Zeile 1 - Zeile 38; Abbildung 3 * | 1-3 | G07C9/00 B60R25/00 |
| A | WO 01 00461 A (HIPP UWE ;MARQUARDT GMBH (DE); MATTES JOHANNES (DE); STEHLE WOLFGA) 4. Januar 2001 (2001-01-04) * Zusammenfassung * * Seite 3, Absatz 3 - Seite 7, Absatz 1 * | 1-3 | |
| A | DE 199 23 983 A (SIEMENS AG) 7. Dezember 2000 (2000-12-07) * Zusammenfassung * * Spalte 1, Zeile 36 - Zeile 63; Ansprüche 6,7 * | 3 | |

**RECHERCHIERTE SACHGEBIETE (Int.Cl.7)**

G07C
B60R

Der vorliegende Recherchenbericht wurde für alle Patentansprüche erstellt

| Recherchenort | Abschlußdatum der Recherche | Prüfer |
|---|---|---|
| DEN HAAG | 9. Juli 2002 | Teutloff, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

EP 1 246 137 A1

**ANHANG ZUM EUROPÄISCHEN RECHERCHENBERICHT
ÜBER DIE EUROPÄISCHE PATENTANMELDUNG NR.**     EP 02 10 0211

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2002

| Im Recherchenbericht angeführtes Patentdokument | | Datum der Veröffentlichung | Mitglied(er) der Patentfamilie | | Datum der Veröffentlichung |
|---|---|---|---|---|---|
| FR 2781076 | A | 14-01-2000 | FR | 2781076 A1 | 14-01-2000 |
| WO 0100461 | A | 04-01-2001 | WO | 0100461 A1 | 04-01-2001 |
| | | | DE | 10029170 A1 | 28-12-2000 |
| | | | EP | 1189789 A1 | 27-03-2002 |
| DE 19923983 | A | 07-12-2000 | DE | 19923983 A1 | 07-12-2000 |
| | | | WO | 0071843 A2 | 30-11-2000 |
| | | | EP | 1194668 A2 | 10-04-2002 |
| | | | US | 2002070845 A1 | 13-06-2002 |

Für nähere Einzelheiten zu diesem Anhang : siehe Amtsblatt des Europäischen Patentamts, Nr.12/82